# EUROPÄISCHE PATENTSCHRIFT

(11) **EP 0 472 251 B1**
(45) Veröffentlichungstag und Bekanntmachung des Hinweises auf die Patenterteilung: **04.10.1995**
(21) Anmeldenummer: 91250212.7
(22) Anmeldetag: 30.07.1991
(51) Int. Cl.: H02G 5/02

(54) **Anordnung zur Verbindung von Sammelschienen**
Device for connection of bars
Dispositif pour accouplement de barres omnibus

(30) Priorität: 24.08.1990 DE 4027214
(43) Veröffentlichungstag der Anmeldung: 26.02.1992
(73) Patentinhaber: SIEMENS AKTIENGESELLSCHAFT, 80333 München (DE)
(72) Erfinder: Genzel, Rolf-Günter, W-6129 Lützelbach (DE); Zeimetz, Karl-Josef, W-5561 Plein (DE)

(56) Entgegenhaltungen:
- DE-A- 2 317 790
- DE-A- 2 853 585
- DE-B- 1 032 822
- FR-A- 2 281 663

## Beschreibung

### Anordnung zur Verbindung von Sammelschienen

Die Erfindung betrifft eine Anordnung zur Verbindung fluchtender Abschnitte von Sammelschienen unter Verwendung von zwei die gegenüberstehenden Enden der Abschnitte übergreifenden laschenartigen Verbindungsstücken, die eine zentrale Durchgangsöffnung für einzige Spannschraube besitzen, die sich durch den Zwischenraum der gegenüberliegenden Abschnitte der Sammelschienen erstreckt.

Eine Anordnung der genannten Art ist durch die DE-U-80 09 461 bekannt geworden. Sollen Sammelschienen mit zwei parallelen Leitern (Doppelsammelschiene) oder mehreren parallelen Leitern verbunden werden, so werden die gleichen laschenartigen Verbindungsstücke jedoch unter zusätzlicher Verwendung von Distanzstücken zwischen den paralleln Leitern.

Der Erfindung liegt die Aufgabe zugrunde, die Anordnung zur Verbindung von Sammelschienen derart auszubilden, daß die gleichen Teile für einfache oder doppelte Sammelschienen verwendbar sind.

Diese Aufgabe wird durch folgende Merkmale gelöst:
a) jedes Verbindungsstück besitzt an seinen zur Auflage auf den Abschnitten vorgesehenen Enden beidseitig ballig gerundete Kontaktfläche;
b) auf der einen Seite jedes Verbindungsstückes sind einander gegenüberliegend zwei der Kontaktflächen und beidseitig jeder der Kontaktflächen zwei Erhebungen angeordnet;
c) zwischen den Erhebungen besteht ein etwa der Breite einer der Sammelschienen entsprechender Abstand;
d) auf der gegenüberliegenden Seite jedes Verbindungsstückes sind einander gegenüberliegend zwei Paare von Kontaktflächen angeordnet, wobei sich zwischen den Kontaktflächen jedes Paares eine Erhebung befindet und
e) die einem Paar von Kontaktflächen zugeordnete Erhebung besitzt eine Breite entsprechend dem Abstand paralleler Abschnitte einer Doppelsammelschiene.

Sind einfache Sammelschienen zu verbinden, so werden die Verbindungsstücke so auf die Abschnitte der Sammelschienen aufgelegt, daß diese von den Erhebungen beidseitig der Kontaktflächen flankiert werden. Hierdurch wird eine seitliche Verschiebung der Verbindungsstücke relativ zu den Sammelschienen vermieden. Sollen dagegen die parallelen Abschnitte einer Doppelsammelschiene verbunden werden, so werden die Verbindungsstücke in umgekehrter Stellung auf die Sammelschienen aufgelegt, nämlich so, daß die mittigen Erhebungen zwischen die Abschnitte eingreifen. Hierdurch wird der Abstand der Abschnitte bestimmt. In beiden Fällen erstreckt sich die Spannschraube durch den Zwischenraum der gegenüberliegenden Enden der Abschnitte der Sammelschienen. Dieser Abstand braucht nicht genau eingehalten zu werden, da - gegeben durch die Länge der Verbindungsstücke - die Abschnitte brückenartig verbunden werden. Ebenso entfällt die Anfertigung von Bohrungen in den Enden der zu verbindenden Abschnitte.

Eine gute Zugänglichkeit der Spannschraube bei mehreren parallelen Sammelschienenzügen kann dadurch erreicht werden, daß die Verbindungsstücke zum Anliegen an den Schmalseiten des Rechteckprofils der Sammelschienen bemessen sind.

Die Verwendung ballig geformter Kontaktflächen an Verbindungsstücken für Sammelschienen ist an sich bekannt (US-A-2 097 324). Diese Verbindungsstücke werden jedoch auf die Breitseiten des Rechteckprofils der Sammelschienen aufgelegt und durch insgesamt fünf Spannschrauben miteinander verbunden. Für die Verbindung von Doppelsammelschienen ist diese Anordnung nicht vorgesehen.

Zu einer über lange Zeit zuverlässigen elektrischen und mechanischen Verbindung der Abschnitte der Sammelschienen kann noch dadurch beigetragen werden, daß die Verbindungsstücke unter dem Einfluß der Spannkraft elastisch biegbar ausgebildet sind. Diese Eigenschaft, die durch eine geeignete Wahl des Werkstoffes und des Materialquerschnittes erzielbar ist, bewirkt beim Anziehen der Spannschraube eine leichte Wälzbewegung der balligen Kontaktflächen an den Abschnitten der Sammelschiene. Dies verbessert die Kontaktgabe. Ferner sei bemerkt, daß Wärmedehnungen der Sammelschienen ohne jeden Schaden für die Verbindungsanordnung möglich sind, weil die Spannschraube nicht die Sammelschienen durchsetzt.

Die Erfindung wird im folgenden anhand der Figuren näher erläutert.

Die Figuren 1, 2 und 3 zeigen ein Verbindungsstück für Sammelschienen in drei verschiedenen Ansichten, und zwar in der Figur 1 von der Seite, in der Figur 2 in einer Stirnansicht und in der Figur 3 in der Draufsicht.

Die Figuren 4 und 5 zeigen die Verbindung von Abschnitten einer einfachen Sammelschiene in einer Seitenansicht und in der Draufsicht, während die Figuren 6 und 7 entsprechende Darstellungen für eine Doppelsammelschiene zeigen.

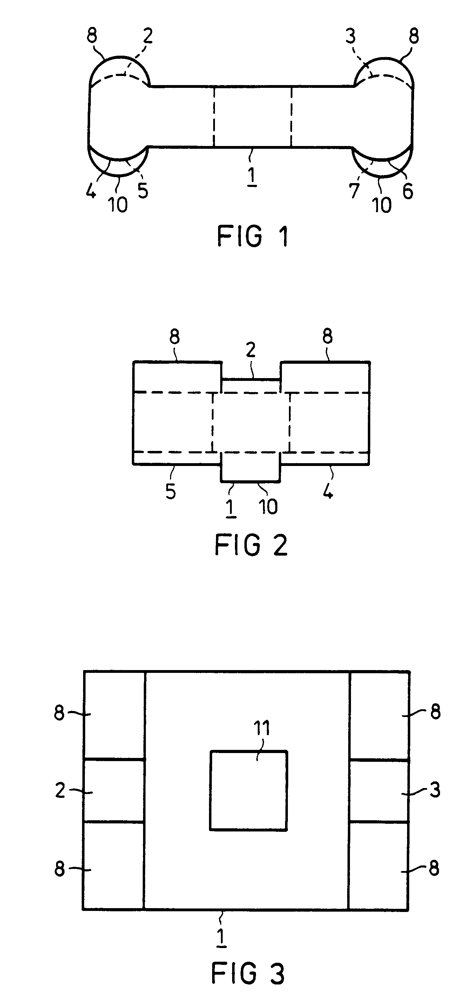

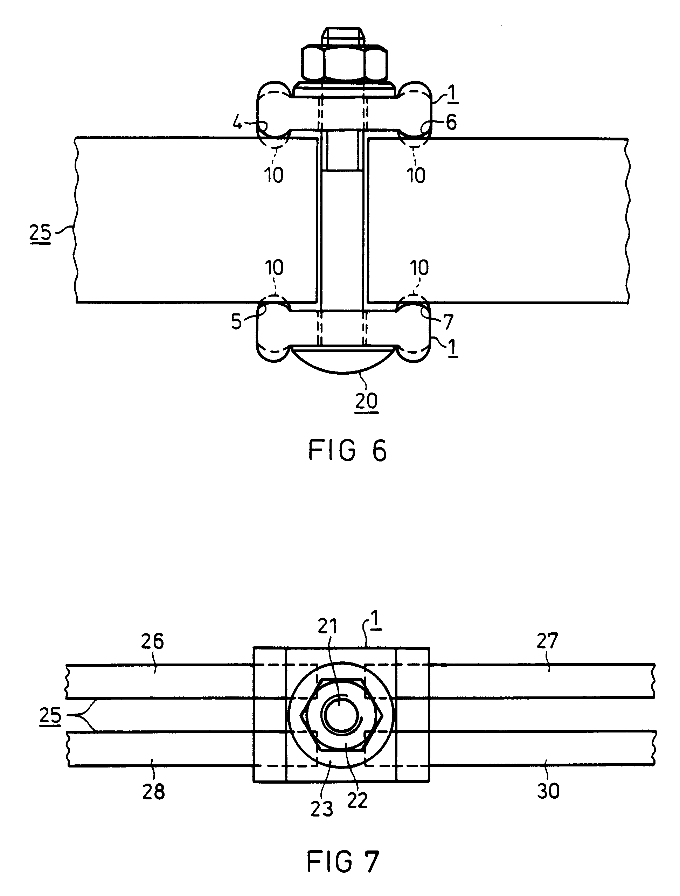

Das Verbindungsstück 1 gemäß den Figuren 1, 2 und 3 besitzt bei rechteckiger Grundform (Figur 3) an den zur Auflage an den Sammelschienen vorgesehenen Enden beidseitig ballig gerundete Kontaktflächen. An der einen Seite sind dies die Kontaktflächen 2 und 3, beidseitig von denen je zwei Erhebungen 8 angeordnet sind. An der gegenüberliegenden Seite sind paarweise angeordnete Kontaktflächen vorgesehen. Zwischen den Kontaktflächen 4 und 5, sowie 6 und 7 jedes dieser Paare befindet sich eine Erhebung 10, die mittig angeordnet ist. Die Breite der Erhebungen 10 entspricht dem vorgesehenen Abstand der parallelen Abschnitte einer Doppelsammelschiene entsprechend den Figuren 6 und 7.

In zentraler Anordnung, d. h. im Schnittpunkt der Diagonalen der rechteckigen Grundform des Verbindungstückes 1, ist eine Durchgangsöffnung 11 (Figur 3) für eine Spannschraube angebracht. Die Durchgangsöffnung 11 hat die Form eine Quadratloches, was die Möglichkeit bietet, eine Schraube mit einem Vierkantansatz am Schraubenkopf zu verwenden. Eine Mitnahme der Schraube beim Anziehen der Mutter kann hierdurch vermieden werden.

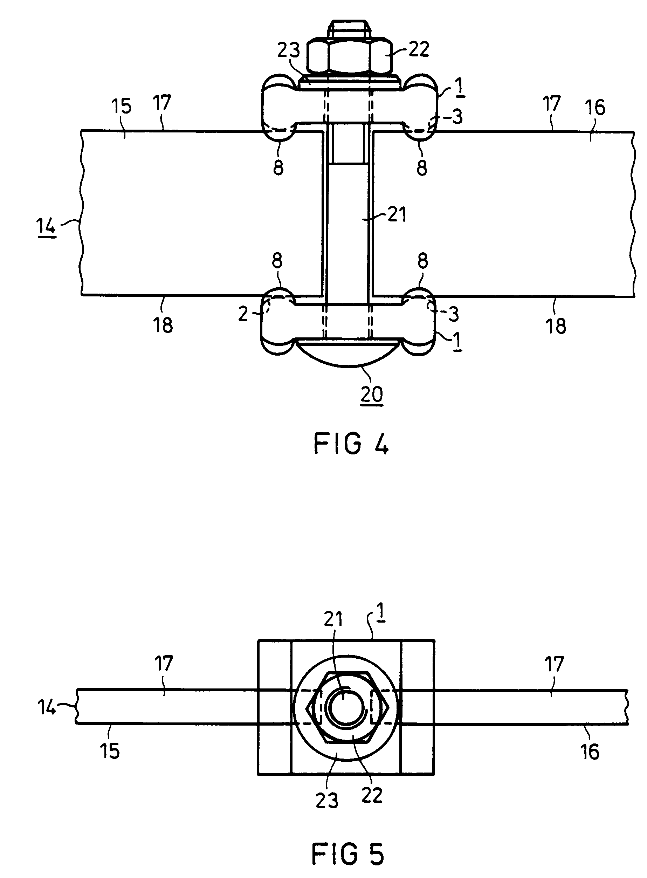

Im folgenden wird zunächst anhand der Figuren 4 und 5 eine Anordnung zur Verbindung von Abschnitten 15 und 16 einer einfachen Sammelschiene 14 beschrieben. An den Schmalseiten 17 und 18 beider Abschnitte 15 und 16 liegt je ein Verbindungsstück 1 gemäß den Figuren 1, 2 und 3 an. Die Abschnitte 15 und 16 liegen an den Erhebungen 8 an (vgl. Figur 2) und werden auf diese Weise gegeneinander ausgerichtet. Zwischen den Abschnitten 15 und 16 besteht ein Abstand, der wenigstens dem Durchmesser des Schaftes 21 der Spannschraube 20 entspricht. Wie die Figuren 4 und 5 jedoch zeigen, kann der Abstand entsprechend der Länge der Verbindungsstücke 1 größer sein. Auf diese Weise ist eine beträchtliche Toleranz in der Längsrichtung der Sammelschiene 14 zulässig, gleichgültig ob diese Toleranz durch eine Maßabweichung oder durch Wärmedehnungen bedingt ist. Die Kontakt- und Verbindungskraft wird unter Verwendung der Spannschraube 20 mittels einer Mutter 22 und eine Druckscheibe 23 aufgebracht. Sind mehrere Sammelschienen nebeneinander angeordnet, so liegen die Muttern 22 an der gut zugänglichen Oberseite des Sammelschienenzuges und sind bei der Montage und zur Kontrolle gut zugänglich.

In dem weiteren Beispiel für eine Verbindung von Sammelschienen gemäß den Figuren 6 und 7 sind eine Doppelsammelschiene 25 mit Abschnitten 26 und 27 sowie 28 und 30 gleichfalls mittels zweier Verbindungsstücke 1 mechanisch und elektrisch verbunden. Unterschiedlich gegenüber dem Beispiel nach den Figuren 4 und 5 ist lediglich, daß die Verbindungsstücke 1 umgekehrt angeordnet sind, nämlich derart, daß die Erhebungen 10 zwischen die parallelen Abschnitte 26 und 28 bzw. 27 und 30 eingreifen und hierdurch den seitlichen Abstand dieser Abschnitte bestimmen und sie gegen seitlich wirkende Kräfte aufgrund des durch die Sammelschienen fließenden Stromes abstützen. Ebenso wie bereits beschrieben sind eine Spannschraube 20 mit einer Mutter 22 und einer Druckscheibe 23 vorgesehen.

Wie anhand der Figuren leicht zu erkennen ist, sind die beschriebenen Verbindungsstücke 1 für Sammelschienen gleicher Breite, jedoch unterschiedlicher Höhe des Rechteckprofils verwendbar. Bei größerer oder kleinerer Breite des Rechteckprofils empfiehlt es sich, entsprechend angepaßte Verbindungsstücke zu verwenden.

## Patentansprüche

1. Anordnung zur Verbindung fluchtender Abschnitte (15, 16; 26, 27, 28, 30) von Sammelschienen (14; 25) unter Verwendung von zwei die einander gegenüberstehenden Enden der Abschnitte (15, 16; 26, 27, 28, 30) übergreifenden laschenartigen Verbindungsstücken (1), die eine zentrale Durchgangsöffnung (11) für eine einzige Spannschraube (20) besitzen, die sich durch den Zwischenraum der gegenüberliegenden Abschnitte (15, 16; 26, 27, 28, 30) der Sammelschienen (14; 25) erstreckt,
**dadurch gekennzeichnet**, daß
a) jedes Verbindungsstück (1) an seinen zur Auflage auf den Abschnitten (15, 16; 26, 27, 28, 30) vorgesehenen Enden beidseitig ballig gerundete Kontaktflächen (2, 3, 4, 5, 6, 7) besteht;
b) auf der einen Seite jedes Verbindungsstückes (1) einander gegenüberliegend zwei der Kontaktflächen (2, 3) und beidseitig jeder der Kontaktflächen zwei Erhebungen (8) angeordnet sind;
c) zwischen den Erhebungen (8) ein etwa der Breite einer der Sammelschienen (14, 25) entsprechender Abstand besteht,
d) auf der gegenüberliegenden Seite jedes Verbindungsstückes (1) einander gegenüberliegend zwei Paare von Kontaktflächen (4, 5; 6, 7) angeordnet sind, wobei sich zwischen den Kontaktflächen (4, 5; 6, 7) jedes Paares eine Erhebung (10) befindet;
e) die einem Paar von Kontaktflächen (4, 5; 6, 7) zugeordnete Erhebung (10) eine Breite entsprechend dem Abstand paralleler Abschnitte (26, 28; 27, 30) einer Doppelschiene (25) besitzt.

2. Anordnung nach Anspruch 1, **dadurch gekennzeichnet**, daß bei Sammelschienen (14; 25) mit Rechteckprofil die Verbindungsstücke (1) zum Anliegen an den Schmalseiten des Rechteckprofils bemessen sind.

3. Anordnung nach einem der vorangehenden Ansprüche, **dadurch gekennzeichnet**, daß die Verbindungsstücke (1) unter dem Einfluß der gewünschten Spannkraft elastisch biegbar ausgebildet sind.

## Claims

1. Arrangement for connecting aligned sections (15, 16; 26, 27, 28, 30) of bus bars (14; 25) with use of two saddle-like connecting pieces (1) which overlap the opposing ends of the sections (15, 16; 26, 27, 28, 30) and have a central through-opening (11) for a single clamping screw (20), which extends through the interspace between the opposing sections (15, 16; 26, 27, 28, 30) of the bus bars (14; 25), characterised in that
a) each connecting piece (1) has spherically rounded contact surfaces (2, 3, 4, 5, 6, 7) on both sides at its ends which are provided to rest upon the sections (15, 16; 26, 27, 28, 30);
b) arranged on the one side of each connecting piece (1) and lying opposite each other there are two of the contact surfaces (2, 3) and on both sides of each of the contact surfaces there are two elevations (8);
c) between the elevations (8) there is a clearance substantially corresponding to the width of one of the bus bars (14, 25);
d) two pairs of contact surfaces (4, 5; 6, 7) are arranged, lying opposite each other, on the opposing side of each connecting piece (1), with an elevation (10) being located between the contact surfaces (4, 5; 6, 7) of each pair;
e) the elevation (10) associated with one pair of contact surfaces (4, 5; 6, 7) has a width corresponding to the clearance between parallel sections (26, 28; 27, 30) of a double bar (25).

2. Arrangement according to claim 1,
characterised in that in the case of bus bars (14; 25) which have a rectangular profile the connecting pieces (1) are dimensioned so as to rest against the narrow sides of the rectangular profile.

3. Arrangement according to one of the preceding claims, characterised in that the connecting pieces (1) are formed so as to be elastically flexible under the influence of the desired clamping force.

## Revendications

1. Dispositif pour relier des tronçons alignés (15,16;26,27,28,30) de barres omnibus (14;25) en utilisant deux pièces de liaison du type attaches (1), qui chevauchent les extrémités, qui se font face, des tronçons (15,16;26,27,28,30) et qui ont une ouverture centrale de passage (11) pour une seule vis de serrage (20), qui traverse l'intervalle entre les sections face-à-face (15,16;26,27,28,30) des barres omnibus (14;25),
caractérisé par le fait que
a) chaque pièce de liaison (1) comporte, à ses extrémités, qui servent d'appui aux tronçons (15,16; 26,27,28,30), des surfaces de contact (2,3,4,5,6,7) arrondies ayant une forme bombée des deux côtés;
b) deux des surfaces de contact (2,3) sont disposées en vis-à-vis sur une des faces de chaque pièce de liaison (1) et deux bossages (8) sont disposés de part et d'autre de chacune des surfaces de contact;
c) une distance, qui correspond approximativement à la largeur de l'une des barres omnibus (14,25), est présente entre les bossages (8);
d) deux couples de surfaces de contact (4,5;6,7) sont disposés en vis-à-vis, sur la face opposée de chaque pièce de liaison (1), un bossage (10) se trouvant entre les surfaces de contact (4,5;6,7) de chaque couple;
e) le bossage (10), qui est associé à un couple de surfaces de contact (4,5;6,7), a une largeur correspondant à la distance entre des tronçons parallèles (26,28; 27,30) d'une barre double (25).

2. Dispositif suivant la revendication 1, caractérisé par le fait que dans le cas de barres omnibus (14;25) de profil rectangulaire, les pièces de liaison (1) sont dimensionnées de manière à s'appliquer contre les petits côtés du profil rectangulaire.

3. Dispositif suivant l'une des revendications précédentes, caractérisé par le fait que les pièces de liaison (1) sont agencées de manière à pouvoir fléchir élastiquement sous l'influence de la force de serrage souhaitée.
